# EUROPÄISCHE PATENTSCHRIFT

(11) **EP 3 650 152 B1**
(45) Veröffentlichungstag und Bekanntmachung des Hinweises auf die Patenterteilung: **17.02.2021**
(21) Anmeldenummer: 18205612.7
(22) Anmeldetag: 12.11.2018
(51) Int. Cl.: B23C 3/32, C23C 4/02, G01B 11/30

(54) **VERFAHREN UND ANORDNUNG ZUM BEARBEITEN EINES WERKSTÜCKS**
METHOD AND ASSEMBLY FOR PROCESSING A WORKPIECE
PROCÉDÉ ET DISPOSITIF D'USINAGE D'UNE PIÈCE

(43) Veröffentlichungstag der Anmeldung: 13.05.2020
(73) Patentinhaber: Sturm Maschinen- & Anlagenbau GmbH, 94330 Salching (DE)
(72) Erfinder: ULLRICH, Wolfgang, 82319 Perach (DE); PEHNELT, Sebastian, 93336 Altmannstein (DE)
(74) Vertreter: Wunderlich & Heim Patentanwälte Partnerschaftsgesellschaft mbB

(56) Entgegenhaltungen:
- DE-A1- 3 038 147
- DE-A1-102012 021 089
- DE-A1-102013 211 324
- JP-A- H09 300 188

## Beschreibung

Die Erfindung betrifft ein Verfahren zum Bearbeiten eines Werkstücks mit einer Oberfläche, insbesondere in einer Bohrung, in welcher eine Rillenstruktur mit Rillen und dazwischenliegenden Stegen eingebracht wird, wobei sich an der Rillenstruktur unerwünschte Grate ausbilden können, gemäß dem Oberbegriff des Anspruchs 1 (siehe z.B. DE 10 2012 021089 A1).

Die Erfindung betrifft weiterhin eine Anordnung zum Bearbeiten eines Werkstücks mit einer Materialabtragsvorrichtung zum Einbringen einer Rillenstruktur mit Rillen und dazwischenliegenden Stegen in eine Oberfläche des Werkstücks, gemäß dem Oberbegriff des Anspruchs 9.

Bei metallischen Werkstücken kann für bestimmte Einsatzzwecke eine Beschichtung der Oberfläche verlangt werden. Beispielsweise bei Motorblöcken aus einem Aluminiumwerkstoff kann eine Beschichtung der Oberfläche der Zylinderlaufbahnen notwendig sein, um mit dem Kolbenring/Kolben ein funktionierendes robustes, tribologisches System zu bilden. Hierfür ist es bekannt, eine metallische Oberflächenbeschichtung etwa durch ein Plasmaspritzen aufzubringen. Es hat sich als besonders zweckmäßig erwiesen, das Beschichtungsmaterial mit dem Grundwerkstoff, also dem Aluminiumwerkstoff, formschlussartig zu verklammern. Zu diesem Zweck wird die zu beschichtende Oberfläche aktiviert, also aufgeraut oder mit einer definierten Rillenstruktur versehen.

Ein solches Verfahren geht beispielsweise aus der EP 3 132 893 A1 der Anmelderin hervor, wobei makroskopische Profilelemente in die zu beschichtende Oberfläche eingebracht werden.

Aus der DE 10 2013 211 324 A1 sind verschiedene Konturformen für derartige makroskopische Profilelemente zur Aktivierung der Oberfläche bekannt, etwa Rillenstrukturen mit einem Rechteckprofil oder einem Schwalbenschwanzprofil. Diese werden mit einem spanabhebenden Bearbeitungswerkzeug in die zu beschichtende Oberfläche vor dem Beschichten eingeschnitten.

Bei diesem mechanischen Bearbeiten können unerwünschte Grate an der Rillenstruktur entstehen. Diese Grate können Ausgangspunkte für Schichtfehler bei einer nachfolgenden Beschichtung sein. So kann in den Bereichen eines Grates eine Schicht nicht ausreichend oder zu hoch ausgebildet werden, so dass eine Fehlstelle an dem Werkstück entsteht. Insbesondere bei der Beschichtung von Zylinderlaufbahnen an Motorblöcken ist die Beschichtung hohen thermischen und mechanischen Belastungen ausgesetzt, so dass derartige Beschichtungsfehler nicht akzeptabel sind. Ein solcher Beschichtungsfehler kann sich im Betrieb des Motors zu einer größeren Schadstelle ausbilden, die im schlimmsten Fall zu einem Ausfall des Motors insgesamt führen kann.

In der Fertigung ist es daher notwendig, die Werkstücke hinsichtlich der Ausbildung von Graten an der Rillenstruktur zu überwachen und sich ausbildende Grathöhen zu ermitteln. Es ist bekannt, diese Grathöhen entweder über Schliffbilder, also über eine zerstörende Prüfung, oder über separat angefertigte Abdruckmassen unter einem Lichtmikroskop zu prüfen. Eine derartige nachgelagerte Überprüfung ist umständlich, so dass diese in der Regel nicht bei jedem Werkstück, sondern basierend auf statistischen Methoden diskontinuierlich erst nach einer gewissen Anzahl von Bearbeitungen, etwa nach jedem 50. Bauteil, durchgeführt wird. Bei den bekannten Prüfungen erhält man so relativ spät eine Rückmeldung über die Bauteilqualität eines Fertigungsloses. Nicht selten wird eine Produktion unterbrochen, bis die Messergebnisse für ein Fertigungslos vorliegen. Zudem liegt bei solchen statistischen Methoden eine grundsätzliche Gefahr darin, dass überraschende Abweichungen nicht oder erst spät erfasst werden.

Der Erfindung liegt die **Aufgabe** zugrunde, ein Verfahren und eine Anordnung zum Bearbeiten eines Werkstücks unter Ausbildung einer Rillenstruktur anzugeben, bei welchen eine Ausbildung von unerwünschten Graten effizient und zuverlässig überprüft werden kann.

Nach der Erfindung wird diese Aufgabe zum einen durch ein Verfahren mit den Merkmalen des Anspruchs 1 und zum anderen mit einer Anordnung mit den Merkmalen des Anspruchs 9 gelöst. Bevorzugte Ausführungsformen der Erfindung sind in den jeweils abhängigen Ansprüchen angegeben.

Das erfindungsgemäße Verfahren ist dadurch gekennzeichnet, dass zum Überprüfen und Ermitteln einer Bildung von Graten eine Messeinrichtung vorgesehen wird, welche ein Licht an die Oberfläche der Rillenstruktur aussendet und von der Oberfläche reflektiertes Licht empfängt, wobei ein Maß der Gratbildung abhängig vom reflektierten Licht ermittelt wird.

Das erfindungsgemäße Verfahren kann zerstörungsfrei und damit effizient bei einzelnen oder sogar allen Werkstücken durchgeführt werden. Die Erfindung beruht dabei auf der Erkenntnis, dass die Ausbildung von Graten an einer einzubringenden Rillenstruktur und deren Höhe bei einer Bestrahlung mit Licht einen Einfluss auf das Reflektionsverhalten der Oberfläche des Werkstücks hat. Gemäß der Erfindung ist eine Messeinrichtung vorgesehen, welche Licht an die Oberfläche der Rillenstruktur aussendet und davon reflektiertes Licht wieder empfängt, wobei der Anteil des reflektierten Lichtes ein Maß für die Gratbildung an dem Werkstück darstellt.

Eine bevorzugte Ausführungsform der Erfindung besteht darin, dass das Ermitteln der Gratbildung mittels der Messeinrichtung gleichzeitig oder unmittelbar nach dem Einbringen der Rillenstruktur durchgeführt wird. Die Messeinrichtung kann dabei unmittelbar an der Bearbeitungsvorrichtung oder diese unmittelbar nachgeschaltet sein. Hierdurch kann zeitnah vorzugsweise an jedem Werkstück die Gratbildung ermittelt werden. Dies bietet die Möglichkeit, einer einsetzenden übermäßigen Gratbildung entgegenzuwirken. Somit kann das erfindungsgemäße Verfahren zur Reduzierung von Ausschussteilen oder insgesamt sogar zu einer Nullfehlerfertigung beitragen.

Grundsätzlich kann für die Messeinrichtung jede Art von Licht eingesetzt werden, insbesondere auch ein monochromatisches Licht. Besonders zuverlässige Messergebnisse ergeben sich nach einer Weiterbildung der Erfindung dadurch, dass das Licht chromatisch ist.

Weiter ist es grundsätzlich möglich, dass die Messeinrichtung über mindestens eine separate Lichtquelle und mindestens einen separaten Sensor zum Empfangen des reflektierten Lichtes aufweist. Bevorzugt ist es nach einer Ausführungsform der Erfindung, dass die Messeinrichtung mindestens einen konfokalen Punktsensor aufweist, der das Licht aussendet und empfängt. Vorzugsweise ist dabei der konfokale Punktsensor mit einem Objektiv senkrecht über der zu untersuchenden Oberfläche angeordnet. Durch die konfokale Anordnung der Lichtquelle und des Punktsensors können besonders zuverlässige Werte hinsichtlich der Reflektion des Lichtes an der Oberfläche und damit zur Gratbildung ermittelt werden.

Nach einer Ausführungsform der Erfindung ist es dabei vorgesehen, dass eine Verminderung eines Verhältnisses zwischen reflektiertem Licht zu ausgesandetem Licht als ein Maß für eine Zunahme der Gratbildung angesehen wird. Es kann hierbei davon ausgegangen werden, dass eine im Wesentliche glatte und damit gratfreie Oberfläche einen hohen Anteil des ausgesandten und vorzugsweise senkrecht auftreffenden Lichtes wieder senkrecht zurückreflektiert. Je stärker eine Gratbildung ausgeprägt ist, also je mehr und/oder je höher die Grate sind umso mehr wird Licht von den Gratflanken seitlich abgelenkt, so dass diese nicht mehr zurück zur Messeinrichtung gelangen. Je größer dieser Streuungseffekt ist umso höher ist die Gratausbildung.

Grundsätzlich kann die Rillenstruktur in jeder geeigneten Weise in die Oberfläche des Werkstücks eingebracht werden, etwa auch mittels eines Lasers. Ein besonders wirtschaftliches Verfahren zum Bearbeiten des Werkstücks liegt nach einer Ausführungsvariante des erfindungsgemäßen Verfahrens darin, dass die Rillenstruktur mit einem materialabtragenden Werkzeug, insbesondere einem Fräskopf oder einem Drehmeißel eingebracht wird. Entsprechende Materialabtragsvorrichtungen mit Fräskopf oder Drehmeißel, auch Einstechmeißel genannt, sind hinlänglich bekannt. Dieses spanabhebende Bearbeiten ist besonders wirtschaftlich, jedoch auch mit einer erhöhten Gefahr an Gratbildung verbunden.

Es ist eine Erkenntnis der Erfindung, dass noch nicht jeder Grat an der eingebrachten Rillenstruktur nachteilig für die nachfolgende Beschichtung ist. Vielmehr können kleinere Grate sogar zu einem besseren Verklammerungseffekt mit der aufgebrachten Beschichtung beitragen. Nach einer Ausführungsvariante der Erfindung ist es bevorzugt, dass bei Erreichen eines vorgegebenen Wertes für das reflektierte Licht das materialabtragende Werkzeug nachgestellt und/oder ausgewechselt wird. Auf diese Weise kann rechtzeitig vor einer übermäßigen Gratausbildung in dem Fertigungsschritt des Materialabtragens und Herstellens der Rillenstruktur eingegriffen werden. So kann auch über einen langen Zeitraum dem Entstehen unerwünscht großer Grate entgegengewirkt werden.

Zudem ist es nach einer Weiterbildung des erfindungsgemäßen Verfahrens vorteilhaft, dass nach dem Einbringen und Überprüfen der Rillenstruktur auf diese eine Beschichtung aufgebracht wird. Die Beschichtung ist dabei insbesondere eine metallische Beschichtung, die durch ein Aufsprühen von Metallpartikeln, insbesondere nach einem Plasmaspritzverfahren, aufgetragen werden.

Hinsichtlich einer Anordnung zum Bearbeiten eines Werkstücks ist die Erfindung dadurch gekennzeichnet, dass zum Überprüfen und Ermitteln einer Bildung von Graten an der Rillenstruktur eine Messeinrichtung vorgesehen ist, welche ausgebildet ist, ein Licht an die Oberfläche der Rillenstruktur auszusenden und von der Oberfläche reflektiertes Licht zu empfangen, wobei ein Maß der Gratbildung abhängig vom reflektierten Licht ermittelbar ist.

Die erfindungsgemäße Anordnung kann insbesondere zur Durchführung des zuvor beschriebenen erfindungsgemäßen Verfahrens eingesetzt werden. Es können dabei die zuvor beschriebenen Vorteile erzielt werden.

Die nach der Erfindung vorgesehene Messeinrichtung kann selbst über eine Rechnereinheit verfügen, welche abhängig von den Messwerten ein noch zulässiges oder nicht mehr zulässiges Maß an Gratbildung ermittelt. Ergänzend oder alternativ kann die Messeinrichtung auch mit einer zentralen Rechnereinheit, insbesondere einer Steuereinheit, der Gesamtanordnung verbunden sein, durch welche die Messwerte der Messeinrichtung ausgewertet und entsprechend einer vorgegebenen Programstruktur eine Entscheidung zur Fortführung des Verfahrens oder zu einem Unterbrechen, etwa zum Auswechseln des materialabtragenden Werkzeugs entscheidet.

Grundsätzlich kann die Messeinrichtung der Materialabtragsvorrichtung nachgeschaltet sein. Für einen effizienten Bearbeitungsablauf ist es nach einer Weiterbildung der Erfindung vorgesehen, dass die Messeinrichtung an der Materialabtragsvorrichtung angeordnet ist. Somit kann insgesamt sehr zeitnah das Bearbeitungsergebnis überprüft und insbesondere schon beim nächsten Bearbeitungsvorgang oder sogar noch beim laufenden Bearbeitungsvorgang eine Korrektur, insbesondere ein Nachstellen oder ein Auswechseln des Werkzeuges erfolgen.

Dabei ist es nach einer Ausführungsvariante der Erfindung besonders vorteilhaft, dass die Rillenstruktur mit mindestens einem materialabtragenden Werkzeug in das Werkstück eingebracht wird und dass eine Anzeige vorgesehen ist, welche abhängig von einem Messergebnis der Messeinrichtung anzeigt, wann das mindestens eine materialabtragende Werkzeug zu wechseln ist. Abhängig von der Anzeige könnte dann beispielsweise eine Bedienperson zeitnah das materialabtragende Werkzeug wechseln. Alternativ kann die Anordnung auch so ausgebildet sein, dass durch die Steuereinrichtung ein automatischer Wechselvorgang eingeleitet wird.

Grundsätzlich weist die Messeinrichtung mindestens eine Lichtquelle und mindestens einen lichtempfindlichen Sensor auf. Eine bevorzugte Ausführungsform der Erfindung besteht darin, dass die Messeinrichtung mindestens einen konfokalen Punktsensor aufweist, der das Licht aussendet und empfängt. Der konfokale Punktsensor ist dabei vorzugsweise senkrecht über der zu untersuchenden Werkstückoberfläche angeordnet. Der Punktsensor dient dabei sowohl als Lichtquelle zum Aussenden des Lichtes vorzugsweise senkrecht auf die Werkstückoberfläche und zum konfokalen Aufnehmen des senkrecht von der Oberfläche reflektierten Lichtes. Der Punktsensor kann dabei mit einem entsprechenden Objektiv zu konfokalen Funktionsweise ausgestattet sein.

Die Messeinrichtung oder der mindestens eine Punktsensor können auf einem Träger angeordnet sein, welcher insbesondere beim Messen relativ zu der Oberfläche des Werkstücks bewegbar ist.

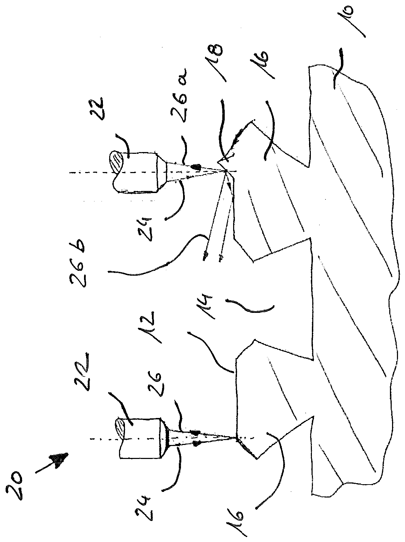

Die Erfindung wird nachfolgend anhand eines bevorzugten Ausführungsbeispieles weiter erläutert, welches schematisch in der Zeichnung dargestellt ist.

Die einzige Figur zeigt stark schematisiert eine vergrößerte Teilquerschnittsansicht eines Werkstücks 10, bei welchem in eine Oberfläche eine Rillenstruktur 12 mit im Querschnitt schalbenschwanzartigen Stegen 16 und dazwischenliegenden Rillen 14 materialabtragend eingebracht ist. Die Rillenstruktur 12 ist stark vergrößert dargestellt, wobei es sich bei einem realen Werkstück 10 um eine makroskopische Rillenstruktur mit einer Rillentiefe von wenigen Millimetern oder unter einem Millimeter handeln kann. Das schematisch angedeutete Werkstück 10 kann insbesondere ein Motorblock mit einer Zylinderbohrung sein, in deren Bohrungswand die Rillenstruktur 12 eingebracht ist.

Mittels einer Messeinrichtung 20, von welcher stark schematisiert ein konfokaler Punktsensor 22 dargestellt ist, wird auf die Oberfläche der Rillenstruktur 12, insbesondere auf eine Oberseite der Stege 16 ein Licht 24 im Wesentlichen vertikal ausgesendet. Das Licht 24 wird an der Oberfläche der Rillenstruktur 12 reflektiert und kann als reflektiertes Licht 26 zurück in den konfokalen Punktsensor 22 der Messeinrichtung 20 gelangen. Je glatter dabei die Oberfläche der Rillenstruktur 12 ist, umso höher ist der Anteil an reflektiertem Licht 26, welches zurück in den konfokalen Punktsensor 22 gelangt.

Beim materialabtragenden Einbringen der Rillenstruktur 12 in die Oberfläche des Werkstücks 10 können insbesondere abhängig vom Zustand der Bearbeitungswerkzeuge, aber auch abhängig vom Material des jeweiligen Werkstücks 10 unerwünschte Grate 18, insbesondere an den Stegen 16 der Rillenstruktur 12, entstehen, wie anschaulich auf der rechten Seite der Zeichnung dargestellt ist.

Wird der Punktsensor 22 der Messeinrichtung 20 über den Oberflächenbereich mit einem Grat 18 bewegt, wird im Gegensatz zu einer glatten Oberfläche ein Teil des ausgesandten Lichtes 24 an Flanken des Grates 18 als seitlich reflektiertes Licht 26b abgestrahlt. Dieses kann somit von dem konfokalen Punktsensor 22 der Messeinrichtung 20 nicht mehr aufgenommen und erfasst werden. Lediglich ein Teil des vertikal reflektierten Lichts 26a gelangt zurück in den Punktsensor 22.

Die Messeinrichtung 20 ist jedenfalls zusammen mit einer nicht-dargestellten Steuereinrichtung oder eine Rechnereinheit ausgebildet, abhängig von einem Verhältnis zwischen dem ausgesandten Licht 24 und dem Anteil des reflektierten Lichtes 26, welches zurück in den Punktsensor 22 gelangt, eine Aussage über das Maß, insbesondere über Anzahl und/oder Größe, der Grate 18 an der Rillenstruktur 12 des Werkstücks 10 zu treffen. Abhängig vom Ergebnis der Messung kann dann ein Signal, welches etwa ein notwendiges Wechseln des Bearbeitungswerkzeuges in dem vorausgegangenen Bearbeitungsschritt des Einbringens der Rillenstruktur 12 anzeigt, ausgegeben werden oder ein solcher Wechsel wird automatisch veranlasst werden.

Im Anschluss an das Messen kann eine Oberflächenbeschichtung der Oberfläche des Werkstücks 10 mit der Rillenstruktur 12 erfolgen. Dies kann insbesondere durch ein Aufspritzen von aufgeschmolzenen Metallpartikeln durch hinlänglich bekannte Aufspritzverfahren erfolgen.

## Patentansprüche

1. Verfahren zum Bearbeiten eines Werkstücks (10) mit einer Oberfläche, insbesondere in einer Bohrung, wobei in die Oberfläche eine Rillenstruktur (12) mit Rillen (14) und dazwischenliegenden Stegen (16) eingebracht wird, wobei sich an der Rillenstruktur (12) unerwünschte Grate (18) ausbilden können,
**dadurch gekennzeichnet,**
**dass** zum Überprüfen und Ermitteln einer Bildung von Graten (18) eine Messeinrichtung (20) vorgesehen wird, welche ein Licht (24) an die Oberfläche der Rillenstruktur (12) aussendet und von der Oberfläche reflektiertes Licht (26) empfängt, wobei ein Maß der Gratbildung abhängig vom reflektierten Licht (26) ermittelt wird.

2. Verfahren nach Anspruch 1,
**dadurch gekennzeichnet,**
**dass** das Ermitteln der Gratbildung mittels der Messeinrichtung (20) gleichzeitig oder unmittelbar nach dem Einbringen der Rillenstruktur (12) durchgeführt wird.

3. Verfahren nach Anspruch 1 oder 2,
**dadurch gekennzeichnet,**
**dass** das Licht (24) chromatisch ist.

4. Verfahren nach einem der Ansprüchen 1 bis 3,
**dadurch gekennzeichnet,**
**dass** die Messeinrichtung (20) mindestens einen konfokalen Punktsensor (22) aufweist, welcher das Licht (24, 26) aussendet und empfängt.

5. Verfahren nach einem der Ansprüche 1 bis 4,
**dadurch gekennzeichnet,**
**dass** eine Verminderung eines Verhältnisses zwischen reflektiertem Licht (26) zu ausgesandtem Licht (24) als ein Maß für eine Zunahme der Gratbildung angesehen wird.

6. Verfahren nach einem der Ansprüche 1 bis 5,
**dadurch gekennzeichnet,**
**dass** die Rillenstruktur (12) mit einem materialabtragenden Werkzeug, insbesondere einem Fräskopf oder einem Drehmeißel, eingebracht wird.

7. Verfahren nach Anspruch 6,
**dadurch gekennzeichnet,**
**dass** bei Erreichen eines vorgegebenen Wertes für das reflektierte Licht (26) das materialabtragende Werkzeug nachgestellt und/oder ausgewechselt wird.

8. Verfahren nach einem der Ansprüche 1 bis 7,
**dadurch gekennzeichnet,**
**dass** nach dem Einbringen und Überprüfen der Rillenstruktur (12) auf diese eine Beschichtung aufgebracht wird.

9. Anordnung zum Bearbeiten eines Werkstücks, insbesondere nach einem Verfahren nach einem der Ansprüche 1 bis 8, mit einer Materialabtragsvorrichtung zum Einbringen einer Rillenstruktur (12) mit Rillen (14) und dazwischenliegenden Stegen (16) in eine Oberfläche des Werkstücks (10),
**dadurch gekennzeichnet,**
**dass** zum Überprüfen und Ermitteln einer Bildung von Graten (18) an der Rillenstruktur (12) eine Messeinrichtung (20) vorgesehen ist, welche ausgebildet ist, ein Licht (24) an die Oberfläche der Rillenstruktur (12) auszusenden und von der Oberfläche reflektiertes Licht (26) zu empfangen, wobei ein Maß der Gratbildung abhängig vom reflektierten Licht (26) ermittelbar ist.

10. Anordnung nach Anspruch 9,
**dadurch gekennzeichnet,**
**dass** die Messeinrichtung (20) an der Materialabtragsvorrichtung angeordnet ist.

11. Anordnung nach Anspruch 9 oder 10,
**dadurch gekennzeichnet,**
**dass** die Rillenstruktur (12) mit mindestens einem materialabtragenden Werkzeug in das Werkstück (10) eingebracht wird und
**dass** eine Anzeige vorgesehen ist, welche abhängig vom einem Messergebnis der Messeinrichtung (20) anzeigt, wann das mindestens eine materialabtragende Werkzeug zu wechseln ist.

12. Anordnung nach einem der Ansprüche 1 bis 11,
**dadurch gekennzeichnet,**
**dass** die Messeinrichtung (20) mindestens einen konfokalen Punktsensor (22) aufweist, welcher das Licht (24, 26) aussendet und empfängt.

## Claims

1. Method for machining a workpiece (10) with a surface, in particular in a bore, wherein into the surface a groove structure (12) with grooves (14) and interposed ribs (16) is introduced, wherein undesirable burrs (18) can develop on the groove structure (12),
**characterized in that**
for testing and determining a formation of burrs (18) a measuring means (20) is provided which emits a light (24) to the surface of the groove structure (12) and receives light (26) reflected from the surface, wherein a degree of the burr formation is determined depending on the reflected light (26).

2. Method according to claim 1,
**characterized in that**
by means of the measuring means (20) the determination of the burr formation is carried out simultaneously or immediately after the introduction of the groove structure (12).

3. Method according to claim 1 or 2,
**characterized in that**
the light (24) is chromatic.

4. Method according to any one of claims 1 to 3,
**characterized in that**
the measuring means (20) has at least one confocal point sensor (22) which emits and receives the light (24, 26).

5. Method according to any one of claims 1 to 4,
**characterized in that**
a reduction of a ratio between reflected light (26) and emitted light (24) is considered as a degree of an increase in the burr formation.

6. Method according to any one of claims 1 to 5,
**characterized in that**
the groove structure (12) is introduced with a material removing tool, in particular a cutting head or a rotary chisel.

7. Method according to claim 6,
**characterized in that**
on reaching a predetermined value for the reflected light (26) the material removing tool is readjusted and/or exchanged.

8. Method according to any one of claims 1 to 7,
**characterized in that**
after the introduction and testing of the groove structure (12) a coating is applied thereto.

9. Arrangement for machining a workpiece, in particular pursuant to a method according to any one of claims 1 to 8, with a material removal device for introducing a groove structure (12) with grooves (14) and interposed ribs (16) into a surface of the workpiece (10),
**characterized in that**
for testing and determining a formation of burrs (18) on the groove structure (12) a measuring means (20) is provided which is designed to emit a light (24) to the surface of the groove structure (12) and receive light (26) reflected from the surface, wherein a degree of the burr formation can be determined depending on the reflected light (26).

10. Arrangement according to claim 9,
**characterized in that**
the measuring means (20) is arranged on the material removal device.

11. Arrangement according to claim 9 or 10,
**characterized in that**
the groove structure (12) is introduced into the workpiece (10) with at least one material removing tool and
**in that** a display is provided which, depending on a measurement result of the measuring means (20), displays when the at least one material removing tool is to be changed.

12. Arrangement according to any one of claims 1 to 11,
**characterized in that**
the measuring means (20) has at least one confocal point sensor (22) which emits and receives the light (24, 26).

## Revendications

1. Procédé d'usinage d'une pièce à usiner (10) avec une surface, en particulier dans un alésage, dans lequel une structure rainurée (12) avec des rainures (14) et des nervures interposées (16) est introduite dans la surface, dans lequel des bavures (18) non souhaitées peuvent se former sur la structure rainurée (12),
**caractérisé en ce**
**que** pour la vérification et la détermination d'une formation de bavures (18) un dispositif de mesure (20) est prévu, lequel émet une lumière (24) au niveau de la surface de la structure rainurée (12) et reçoit de la lumière (26) réfléchie par la surface, dans lequel une mesure de la formation de bavures est déterminée en fonction de la lumière réfléchie (26).

2. Procédé selon la revendication 1,
**caractérisé en ce**
**que** la détermination de la formation de bavures est réalisée au moyen du dispositif de mesure (20) simultanément ou directement après l'introduction de la structure rainurée (12).

3. Procédé selon la revendication 1 ou 2,
**caractérisé en ce**
**que** la lumière (24) est chromatique.

4. Procédé selon l'une des revendications 1 à 3,
**caractérisé en ce**
**que** le dispositif de mesure (20) présente au moins un capteur ponctuel (22) confocal qui émet et reçoit la lumière (24, 26).

5. Procédé selon l'une des revendications 1 à 4,
**caractérisé en ce**
**qu'**une réduction d'un rapport entre la lumière réfléchie (26) et la lumière émise (24) est considérée comme une mesure d'une augmentation de la formation de bavures.

6. Procédé selon l'une des revendications 1 à 5,
**caractérisé en ce**
**que** la structure rainurée (12) est introduite avec un outil d'enlèvement de matière, en particulier une tête de fraisage ou un outil de tournage.

7. Procédé selon la revendication 6,
**caractérisé en ce**
**que** lors de l'atteinte d'une valeur prédéfinie pour la lumière réfléchie (26), l'outil d'enlèvement de matière est réajusté et/ou remplacé.

8. Procédé selon l'une des revendications 1 à 7,
**caractérisé en ce**
**qu'**après l'introduction et la vérification de la structure rainurée (12) un revêtement est appliqué sur celle-ci.

9. Agencement d'usinage d'une pièce à usiner, en particulier selon un procédé selon l'une des revendications 1 à 8, avec un dispositif d'enlèvement de matière pour l'introduction d'une structure rainurée (12) avec des rainures (14) et des nervures interposées (16) dans une surface de la pièce à usiner (10),
**caractérisé en ce**
**que** pour la vérification et la détermination d'une formation de bavures (18) au niveau de la structure rainurée (12) un dispositif de mesure (20) est prévu, lequel est réalisé afin d'émettre une lumière (24) au niveau de la surface de la structure rainurée (12) et de recevoir de la lumière réfléchie par la surface (26), dans lequel une mesure de la formation de bavures peut être déterminée en fonction de la lumière réfléchie (26).

10. Agencement selon la revendication 9,
**caractérisé en ce**
**que** le dispositif de mesure (20) est agencé au niveau du dispositif d'enlèvement de matière.

11. Agencement selon la revendication 9 ou 10,
**caractérisé en ce**
**que** la structure rainurée (12) est introduite dans la pièce à usiner (10) avec au moins un outil d'enlèvement de matière et
**qu'**un affichage est prévu, lequel indique en fonction d'un résultat de mesure du dispositif de mesure (20) le moment où l'au moins un outil d'enlèvement de matière doit être changé.

12. Agencement selon l'une des revendications 1 à 11,
**caractérisé en ce**
**que** le dispositif de mesure (20) présente au moins un capteur ponctuel (22) confocal qui émet et reçoit la lumière (24, 26).
